# EUROPÄISCHE PATENTSCHRIFT

(11) **EP 1 741 540 B1**
(45) Veröffentlichungstag und Bekanntmachung des Hinweises auf die Patenterteilung: **05.12.2018**
(21) Anmeldenummer: 06114974.6
(22) Anmeldetag: 06.06.2006
(51) Int. Cl.: B29C 47/06, C08J 5/18, C08K 5/098

(54) **Verwendung einer Polyamidformmasse mit hoher Schmelzesteifigkeit zur Coextrusion mit einem hochschmelzenden Polymer**
Use of a polyamide moulding composition with high melt rigidity for coextruding with a polymer melting at a high temperature
Utilisation d' une composition de moulage à base de polyamide ayant une résistance à la fusion élevée pour coextrusion avec un polymère fondant à température élevée

(30) Priorität: 04.07.2005 DE 102005031491
(43) Veröffentlichungstag der Anmeldung: 10.01.2007
(73) Patentinhaber: Evonik Degussa GmbH, 45128 Essen (DE)
(72) Erfinder: Dowe, Andreas, Borken 46325 (DE); Kuhmann, Karl Dr., Dülmen 48249 (DE); Baumann, Franz-Erich, Dr., Dülmen 48249 (DE); Himmelmann, Martin, Haltern am See 45721 (DE); Wursche, Roland, Dr., Dülmen 48249 (DE); Böer, Michael, Olfen 59399 (DE); Göring, Rainer, Borken 46325 (DE)

(56) Entgegenhaltungen:
- EP-A- 1 283 101
- EP-A2- 1 512 710

## Beschreibung

Die vorliegende Erfindung hat ein Verfahren zur Coextrusion eines Mehrschichtverbundes aus einer Polyamidformmasse mit hoher Schmelzesteifigkeit und einer Formmasse auf Basis eines hochschmelzenden Polymers sowie die damit hergestellten Mehrschichtverbunde zum Gegenstand.

Hochschmelzende Polymere im Sinne dieser Erfindung sind solche, die nur bei hohen Temperaturen verarbeitbar sind. Handelt es sich um ein teilkristallines Polymer, so liegt der Kristallitschmelzpunkt Tₘ, gemessen mittels DSC nach ISO 11357, mindestens bei 270 °C. Im Falle eines amorphen Polymers liegt der Glasübergangspunkt T_{g}, ebenfalls mittels DSC nach ISO 11 357 gemessen, bei mindestens 180 °C. Beide Polymertypen können erst bei Temperaturen um 300 °C oder darüber mit wirtschaftlich ausreichender Geschwindigkeit extrudiert werden.

In der EP 1283101 A ist die Herstellung eines Mehrschichtverbundes mittels Coextrusion einer Polyamidformmasse mit einer Formmasse auf Basis eines hochschmelzenden Polymers, das einen Kristallitschmelzpunkt Tₘ von mehr als 260 °C aufweisen kann, beschrieben.

Bei der Coextrusion von Polyamiden wie etwa PA12 mit derartigen HT-Polymeren können aufgrund der hohen Extrusionstemperaturen und der dadurch bedingten stark reduzierten Schmelzesteifigkeit des Polyamids verschiedene Schwierigkeiten auftreten. Eine zu hohe Differenz der Schmelzeviskositäten führt zu Instabilitäten der Schichtgrenzen, zu schlechten Schicht- und Wanddickenverteilungen und insgesamt zu einer ungenügenden Extrudatqualität.

Aus diesem Grund gab es in der Vergangenheit Entwicklungen, bei denen der Schmelzpunkt beispielsweise von ETFE (Kristallitschmelzpunkt Tₘ bei etwa 270 °C; Verarbeitungstemperatur 300 bis 340 °C) reduziert wurde, um eine Coextrudierbarkeit mit niedriger schmelzenden Polymeren wie etwa PA12 zu erzielen. Ein Ergebnis dieser Entwicklungen sind z.B. soft-ETFE (z. B. Neoflon RP7000 der Fa. Daikin, Japan) mit einem Kristallitschmelzpunkt von ca. 255 °C und einer empfohlenen Verarbeitungstemperatur von 280 bis 290 °C oder der Polymertyp EFEP (z. B. Neoflon RP5000 der Fa. Daikin), der einen Kristallitschmelzpunkt von ca. 195 °C aufweist und bei etwa 240 bis 285 °C verarbeitet wird. Die Schmelzesteifigkeit einer Extrusionsformmasse auf PA12-Basis reicht in diesem Verarbeitungsfenster aus, um eine Coextrudierbarkeit mit soft-ETFE bzw. EFEP in ausreichender Qualität zu realisieren. Allerdings nimmt man bei der Modifizierung des ETFE in Kauf, dass sich dessen anwendungstechnische Eigenschaften, beispielsweise die Sperrwirkung gegenüber Kraftstoffen, verschlechtern.

Eigene Untersuchungen haben gezeigt, dass auch eine Coextrusion mit anderen hochschmelzenden Polymeren wie z. B. PPS aufgrund der oben beschriebenen Problematik nur schwer zu realisieren ist.

Die der Erfindung zugrundeliegende Aufgabe bestand darin, die obengenannten Nachteile zu vermeiden.

Diese Aufgabe wurde gelöst durch ein Verfahren zur Herstellung eines Merhschichtverbundes, wobei
a) eine Polyamidformmasse bereitgestellt wird, wobei beim eingesetzten Polyamid mindestens 30 % der Endgruppen als Aminoendgruppen vorliegen,
b) eine Vormischung der Polyamidformmasse und 0,005 bis 10 Gew.-Teilen einer Verbindung mit mindestens zwei Estereinheiten der Kohlensäure mit Phenolen oder Alkoholen, bezogen auf 100 Gew.-Teile Polyamid hergestellt wird,
c) die Mischung gegebenenfalls gelagert und/oder transportiert wird und
d) die Mischung anschließend mit einer Formmasse coextrudiert wird, die mindestens 50 Gew.-% eines hochschmelzenden Polymers enthält, das einen Kristallitschmelzpunkt Tₘ von mindestens 270 °C und/oder eine Glasübergangstemperatur T_{g} von mindestens 180 °C aufweist, wobei die Mischung erst bei der Verarbeitung aufgeschmolzen wird und wobei Tₘ und T_{g} mittels DSC gemäß ISO 11357 gemessen werden.

Eine Polyamidformmasse, die eine Verbindung mit mindestens zwei Carbonateinheiten enthält, ist aus der WO 00/66650 bekannt. Dort wird die Verwendung von Verbindungen mit mindestens zwei Carbonateinheiten zur Aufkondensierung von Polyamiden beschrieben, wobei die Eigenschaften sicher und stabil eingestellt werden können und die Möglichkeit eröffnet wird, eine Mehrfachverarbeitung des aufkondensierten Materials vorzunehmen, ohne dass es zu Gelbildung oder Inhomogenitäten kommt. Ein auf diesem Prinzip beruhendes Additiv zur Molekulargewichtseinstellung bei Polyamiden wird von der Fa. Brüggemann KG unter der Bezeichnung Brüggolen M1251 vertrieben. Primäre Anwendungen liegen im Bereich der Viskositätseinstellung für Recyclat aus PA6 oder PA66, das in Extrusionsformmassen wiederverwertet wird. Bei dem Additiv Brüggolen M1251 handelt es sich um ein Masterbatch eines niedrigviskosen Polycarbonats, beispielsweise Lexan 141, in einem säureterminierten PA6. Für den Molekulargewichtsaufbau ist eine Reaktion der im aufzukondensierenden Material enthaltenen Aminoendgruppen mit dem Polycarbonat ursächlich.

Ein im Sinne der Erfindung geeignetes Polyamid ist auf Basis von Lactamen, Aminocarbonsäuren, Diaminen bzw. Dicarbonsäuren aufgebaut. Es kann darüber hinaus verzweigend wirkende Bausteine enthalten, die beispielsweise von Tricarbonsäuren, Triaminen oder Polyethylenimin abgeleitet sind. Geeignete Typen sind, jeweils als Homopolymer oder als Copolymer, beispielsweise PA6, PA66, PA610, PA66/6 sowie insbesondere PA612, PA1010, PA1012, PA1212, PA613, PA614, PA1014, PA11, PA12 oder ein transparentes Polyamid. Bei transparenten Polyamiden kommen beispielsweise in Frage:
- das Polyamid aus Terephthalsäure und dem Isomerengemisch aus 2.2.4- und 2.4.4-Trimethylhexamethylendiamin,
- das Polyamid aus Isophthalsäure und 1.6-Hexamethylendiamin,
- das Copolyamid aus einem Gemisch aus Terephthalsäure/Isophthalsäure und 1.6-Hexamethylendiamin,
- das Copolyamid aus Isophthalsäure, 3.3'-Dimethyl-4.4'-diaminodicyclohexylmethan und Laurinlactam oder Caprolactam,
- das (Co)Polyamid aus 1.12-Dodecandisäure, 3.3'-Dimethyl-4.4'-diaminodicyclohexylmethan und gegebenenfalls Laurinlactam oder Caprolactam,
- das Copolyamid aus Isophthalsäure, 4.4'-Diaminodicyclohexylmethan und Laurinlactam oder Caprolactam,
- das Polyamid aus 1.12-Dodecandisäure und 4.4'-Diaminodicyclohexylmethan,
- das Copolyamid aus einem Terephthalsäure/Isophthalsäure-Gemisch, 3.3'-Dimethyl-4.4'-diaminodicyclohexylmethan und Laurinlactam.

Weiterhin sind Polyetheramide auf der Basis von Lactamen, Aminocarbonsäuren, Diaminen, Dicarbonsäuren und Polyetherdiaminen und/oder Polyetherdiolen geeignet.

Bevorzugt haben die Ausgangsverbindungen Molekulargewichte Mₙ von größer als 5000, insbesondere von größer als 8000. Hierbei werden Polyamide eingesetzt, deren Endgruppen zumindest teilweise als Aminogruppen vorliegen. Beispielsweise liegen mindestens 30 %, mindestens 40 %, mindestens 50 %, mindestens 60 %, mindestens 70 %, mindestens 80 % oder mindestens 90 % der Endgruppen als Aminoendgruppen vor. Die Herstellung von Polyamiden mit höherem Aminoendgruppengehalt unter Verwendung von Diaminen oder Polyaminen als Regler ist Stand der Technik. Im vorliegenden Fall wird bei der Herstellung des Polyamids bevorzugt ein aliphatisches, cycloaliphatisches oder araliphatisches Diamin mit 4 bis 44 C-Atomen als Regler eingesetzt. Geeignete Diamine sind beispielsweise Hexamethylendiamin, Decamethylendiamin, 2.2.4- bzw. 2.4.4-Trimethylhexamethylendiamin, Dodecamethylendiamin, 1.4-Diaminocyclohexan, 1.4- oder 1.3-Dimethylaminocyclohexan, 4.4'-Diaminodicyclohexylmethan, 4.4'-Diamino-3.3'-dimethyldicyclohexylmethan, 4.4'-Diaminodicyclohexylpropan, Isophorondiamin, Metaxylylidendiamin oder Paraxylylidendiamin.

In einer weiteren bevorzugten Ausführungsform wird bei der Herstellung des Polyamids ein Polyamin als Regler und gleichzeitig Verzweiger eingesetzt. Beispiele hierfür sind Diethylentriamin, 1.5-Diamino-3-(β-aminoethyl)pentan, Tris(2-aminoethyl)amin, N,N-Bis(2-aminoethyl)-N',N'bis[2-[bis(2-aminoethyl)amino]-ethyl]-1,2-ethandiamin, Dendrimere sowie Polyethylenimine, insbesondere verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
25 bis 46 % primäre Aminogruppen,
30 bis 45 % sekundäre Aminogruppen und
16 bis 40 % tertiäre Aminogruppen.

Im erfindungsgemäßen Verfahren wird mindestens eine Verbindung mit mindestens zwei Carbonateinheiten in einem Mengenverhältnis von 0,005 bis 10 Gew.-% eingesetzt, berechnet im Verhältnis zum eingesetzten Polyamid. Vorzugsweise liegt dieses Verhältnis im Bereich von 0,01 bis 5,0 Gew.-%, besonders bevorzugt im Bereich von 0,05 bis 3 Gew.-%. Der Begriff "Carbonat" bedeutet hier Ester der Kohlensäure mit Phenolen oder Alkoholen.

Die Verbindung mit mindestens zwei Carbonateinheiten kann niedermolekular, oligomer oder polymer sein. Sie kann vollständig aus Carbonateinheiten bestehen oder sie kann noch weitere Einheiten aufweisen. Diese sind vorzugsweise Oligo- oder Polyamid-, -ester-, -ether-, -etheresteramid- oder -etheramideinheiten. Solche Verbindungen können durch bekannte Oligo- oder Polymerisationsverfahren bzw. durch polymeranaloge Umsetzungen hergestellt werden.

In einer bevorzugten Ausführungsform handelt es sich bei der Verbindung mit mindestens zwei Carbonateinheiten um ein Polycarbonat, beispielsweise auf Basis von Bisphenol A, bzw. um ein Blockcopolymeres, das einen derartigen Polycarbonatblock enthält.

Geeignete Verbindungen mit mindestens zwei Carbonateinheiten sowie geeignete Masterbatches sind in der WO 00/66650, auf die hier ausdrücklich Bezug genommen wird, ausführlich beschrieben.

Die Eindosierung der als Additiv verwendeten Verbindung mit mindestens zwei Carbonateinheiten in Form eines Masterbatches ermöglicht eine genauere Dosierung des Additivs, da größere Mengen verwendet werden. Es stellte sich zudem heraus, dass durch die Verwendung eines Masterbatches eine verbesserte Extrudatqualität erzielt wird. Das Masterbatch umfasst als Matrixmaterial bevorzugt das Polyamid, das auch im erfindungsgemäßen Verfahren aufkondensiert wird, oder ein damit verträgliches Polyamid, jedoch können auch unverträgliche Polyamide unter den Reaktionsbedingungen eine partielle Anbindung an das aufzukondensierende Polyamid erfahren, was eine Kompatibilisierung bewirkt. Das als Matrixmaterial im Masterbatch verwendete Polyamid hat bevorzugt ein Molekulargewicht Mₙ von größer als 5000 und insbesondere von größer als 8000. Hierbei sind diejenigen Polyamide bevorzugt, deren Endgruppen überwiegend als Carbonsäuregruppen vorliegen. Beispielsweise liegen mindestens 80 %, mindestens 90 % oder mindestens 95 % der Endgruppen als Säuregruppen vor.

Die Konzentration der Verbindung mit mindestens zwei Carbonateinheiten im Masterbatch beträgt vorzugsweise 0,15 bis 50 Gew.-%, besonders bevorzugt 0,2 bis 25 Gew.-% und insbesondere bevorzugt 0,3 bis 15 Gew.-%. Die Herstellung eines solchen Masterbatches erfolgt in der üblichen, dem Fachmann bekannten Weise.

Die Erfindung ist anwendbar bei Polyamiden, die herstellungsbedingt mindestens 5 ppm Phosphor in Form einer sauren Verbindung enthalten. In diesem Fall wird der Polyamidformmasse vor der Compoundierung oder bei der Compoundierung 0,001 bis 10 Gew.-%, bezogen auf das Polyamid, eines Salzes einer schwachen Säure zugegeben. Geeignete Salze sind in der DE-A-103 37 707 offenbart, auf die hiermit ausdrücklich Bezug genommen wird, sowie in der hierzu äquivalenten EP 1512710 A. In beiden Schriften wird die Aufkondensierung eines Polyamids, das saure Phosphoverbindungen als Katalysatorrückstand enthält, mit Hilfe einer Verbindung mit mindestens zwei Carbonateinheiten beschrieben.

Die Erfindung ist jedoch genau so gut anwendbar bei Polyamiden, die herstellungsbedingt weniger als 5 ppm Phosphor oder gar keinen Phosphor in Form einer sauren Verbindung enthalten. In diesem Fall kann zwar, muss aber nicht ein entsprechendes Salz einer schwachen Säure zugegeben werden.

Erfindungsgemäß können die üblichen Zuschlagstoffe verwendet werden, die bei der Herstellung von Polyamidformmassen Verwendung finden. Illustrative Beispiele hierfür sind Färbemittel, Flammverzögerer und -schutzmittel, Stabilisatoren, Füllstoffe, Gleitfähigkeitsverbesserer, Formentrennmittel, Schlagzähmodifikatoren, Weichmacher, Kristallisationsbeschleuniger, Antistatika, Schmiermittel, Verarbeitungshilfsmittel sowie weitere Polymere, die mit Polyamiden üblicherweise compoundiert werden.

Beispiele dieser Zuschlagstoffe sind wie folgt:
Färbemittel: Titandioxid, Bleiweiß, Zinkweiß, Liptone, Antimonweiß, Ruß, Eisenoxidschwarz, Manganschwarz, Kobaltschwarz, Antimonschwarz, Bleichromat, Mennige, Zinkgelb, Zinkgrün, Cadmiumrot, Kobaltblau, Berliner Blau, Ultramarin, Manganviolett, Cadmiumgelb, Schweinfurter Grün, Molybdänorange und -rot, Chromorange und -rot, Eisenoxidrot, Chromoxidgrün, Strontiumgelb, Molybdänblau, Kreide, Ocker, Umbra, Grünerde, Terra di Siena gebrannt, Graphit oder lösliche organische Farbstoffe.

Flammverzögerer und Flammschutzmittel: Antimontrioxid, Hexabromcyclododecan, Tetrachlor- oder Tetrabrombisphenol, halogenierte Phosphate, Borate, Chlorparaffine sowie roter Phosphor, ferner Stannate, Melamincyanurat und dessen Kondensationsprodukte wie Melam, Melem, Melon, Melaminverbindungen wie Melaminpyro- und -polyphosphat, Ammoniumpolyphosphat, Aluminiumhydroxid, Calciumhydroxid sowie phosphororganische Verbindungen, die keine Halogene enthalten wie beispielsweise Resorcinoldiphenylphosphat oder Phosphonsäureester.

Stabilisatoren: Metallsalze, insbesondere Kupfersalze und Molybdänsalze sowie Kupferkomplexe, Phosphite, sterisch gehinderte Phenole, sekundäre Amine, UV-Absorber und HALS-Stabilisatoren.

Gleitfähigkeitsverbesserer und Schmiermittel: MoS₂, Paraffine, Fettalkohole sowie Fettsäureamide.

Formentrennmittel und Verarbeitungshilfsstoffe: Wachse (Montanate), Montansäurewachse, Montanesterwachse, Polysiloxane, Polyvinylalkohol, SiO₂, Calciumsilikate sowie Perfluorpolyether.

Weichmacher: BBSA, POBO.

Schlagzähmodifikatoren: Polybutadien, EPM, EPDM, HDPE, Acrylatkautschuk.

Antistatika: Ruß, Carbonfasern, Graphitfibrillen, mehrwertige Alkohole, Fettsäureester, Amine, Säureamide, quaternäre Ammoniumsalze.

Weitere Polymere: ABS, Polypropylen.

Diese Zuschlagstoffe können in den üblichen, dem Fachmann bekannten Mengen verwendet werden.

Das hochschmelzende Polymer besitzt vorzugsweise einen Kristallitschmelzpunkt Tₘ von jeweils mindestens 270 °C, 275 °C, 280 °C, 285 °C, 290 °C, 295 °C oder 300 °C und/oder eine Glasübergangstemperatur von jeweils mindestens 180 °C, 185 °C, 190 °C, 195 °C, 200 °C, 205 °C, 210 °C, 215 °C, 220 °C, 225 °C, 230 °C, 235 °C, 240 °C oder 245 °C. Es ist in der Formmasse auf Basis dieses Polymers zu mindestens 50 Gew.-%, mindestens 55 Gew.-%, mindestens 60 Gew.-%, mindestens 65 Gew.-%, mindestens 70 Gew.-%, mindestens 75 Gew.-% oder mindestens 80 Gew.-% enthalten.

Geeignete hochschmelzende Polymere sind beispielsweise:
- Fluorpolymere wie etwa Polytetrafluorethylen (PTFE), Tetrafluorethylen-Hexafluorpropen-Copolymere (FEP) oder Ethylen-Tetrafluorethylen-Copolymere (ETFE);
- Polyamide und Copolyamide wie etwa PA46, PA66, PA9T, PA12T, PA66/6T, PA6/6T oder PA6T/MPMDT (MPMD steht für 2-Methylenpentamethylendiamin);
- Polyetherketone wie etwa PEEK, PEKK oder PEK;
- flüssigkristalline Polymere (LCP), etwa flüssigkristalline Polyester;
- Polyphenylensulfid (PPS);
- Polysulfone;
- Polyethersulfone;
- Polyetherimide sowie
- syndiotaktisches Polystyrol.

Bei Bedarf kann die Schichtenhaftung zwischen der Polyamidformmasse und der Formmasse auf Basis des hochschmelzenden Polymers durch Verwendung eines geeigneten Haftvermittlers erzielt werden.

Überraschenderweise wurde festgestellt, dass bei erfindungsgemäßen Zugabeweise während der Verarbeitung eine signifikante Erhöhung der Schmelzesteifigkeit eintritt, bei gleichzeitig moderaten Verarbeitungsdrücken und geringer Motorlast. Somit können trotz hoher Schmelzeviskosität hohe Durchsätze bei der Verarbeitung erzielt werden, woraus eine Verbesserung der Wirtschaftlichkeit des Herstellverfahrens resultiert.

Die Verbindung mit mindestens zwei Carbonateinheiten wird im anspruchsgemäßen Verfahren als solche oder als Masterbatch erst nach der Compoundierung, aber spätestens während der Verarbeitung zugegeben. Bevorzugt mischt man bei der Verarbeitung das aufzukondensierende Polyamid bzw. die dieses Polyamid enthaltende Polyamidformmasse als Granulat mit dem Granulat der Verbindung mit mindestens zwei Carbonateinheiten oder dem entsprechenden Masterbatch. Es kann aber auch eine Granulatmischung der fertig compoundierten Polyamidformmasse mit der Verbindung mit mindestens zwei Carbonateinheiten bzw. dem Masterbatch hergestellt, anschließend transportiert oder gelagert und danach verarbeitet werden. Entsprechend kann natürlich auch mit Pulvermischungen verfahren werden. Entscheidend ist, dass die Mischung erst bei der Verarbeitung aufgeschmolzen wird. Eine gründliche Vermischung der Schmelze bei der Verarbeitung ist empfehlenswert. Das Masterbatch kann genauso gut jedoch auch als Schmelzestrom mit Hilfe eines beigestellten Extruders in die Schmelze der zu verarbeitenden Polyamidformmasse zudosiert und dann gründlich eingemischt werden.

Die nach dem anspruchsgemäßen Verfahren hergestellten Mehrschichtverbunde sind beispielsweise Profile, Flachprofile, Hohlkammerprofile, Versorgungsleitungen wie etwa Tankstellenversorgungsleitungen, Belüftungsleitungen, Luftansaugrohre, Tankeinfüllstutzen, Kraftstoffleitungen, Tankentlüftungsleitungen, Kurbelgehäuseentlüftungsleitungen, Kühlmittelleitungen, Druckluftbremsleitungen, Hydraulikleitungen (Kupplung und Bremse), Kabelkanäle, Kabelummantelungen, Flachfolien, Blasfolien, Platten, Vorratsbehälter, Flaschen oder Kraftstofftanks. Derartige Formteile und Ummantelungen sind herstellbar beispielsweise durch Coextrusion einschließlich sequentielle Coextrusion oder Coextrusionsblasformen wie etwa Saugblasformen, 3-D-Blasformen, Schlaucheinlege- und Schlauchmanipulationsverfahren. Diese Verfahren sind Stand der Technik. Weiterhin ist es möglich, den Mehrschichtverbund mit Hilfe des sogenannten Conex-Verfahrens herzustellen. Es handelt sich hierbei um eine Coextrusion, wobei die einzelnen Schichten vergleichbar wie bei einem Wickelverfahren aufeinander aufgetragen werden (WO 97/28949).

Ein erfindungsgemäß hergestelltes mehrschichtiges Rohr kann in einer vorteilhaften Ausführungsform mit zwei Deckeln versehen werden, wie sie beispielsweise im Gebrauchsmuster DE 20 2004 004753 U1 beschrieben sind. Anschließend wird das Rohr mit glas- oder aramidfaserhaltigen Tapes oder Rovings umwickelt. Dadurch entsteht ein leichter, permeationsreduzierter Vorratsbehälter für Gase und Flüssigkeiten.

Geeignete Schichtenkonfigurationen beim erfindungsgemäßen Rohr sind, von außen nach innen, beispielsweise folgende, wobei PA für die anspruchsgemäße Polyamidformmasse steht, HT für die Formmasse auf Basis eines hochschmelzenden Polymers und HV für Haftvermittler:
PA/HT
HT/PA
PA/HV/HT
HT/HV/PA
PA/HT/PA
HT/PA/HT
PA/HV/HT/HV/PA
PA/HT/HT (elektrisch leitfähig)
PA/HT/PA/PA (elektrisch leitfähig)

Die elektrische Leitfähigkeit der Innenschicht kann gemäß dem Stand der Technik beispielweise durch Eincompoundieren einer wirksamen Menge von Leitruß, Graphitfibrillen oder anderen Leitfähigkeitsadditiven in die jeweilige Formmasse erzielt werden.

Im Folgenden soll die Erfindung beispielhaft erläutert werden. In den Versuchen wurden folgende Materialien eingesetzt:

| | |
|---|---|
| Amingeregeltes PA12 | mit 50 mäq/kg NH₂-Gruppen und 9 mäq/kg COOH-Gruppen, ηᵣₑₗ ca. 2,15. |
| Säuregeregeltes PA12 | mit 8 mäq/kg NH₂-Gruppen und 50 mäq/kg COOH-Gruppen, ηᵣₑₗ ca. 2,15. |
| Brüggolen® M1251, | eine Mischung aus einem niederviskosen Polycarbonat und einem säureterminierten PA6. |
| Ceasit® PC | (Calciumstearat). |

Auf einem Zweischneckenextruder vom Typ Werner & Pfleiderer ZSK 30 wurden die in der Tabelle 1 angegebenen Zusammensetzungen hergestellt.

**Tabelle 1: Herstellung der anschließend weiterverwendeten Zusammensetzungen**

| | **Compound A** | **Batch 1** | **Batch 2** | **Batch 3** | **Batch 4** |
|---|---|---|---|---|---|
| Amingeregeltes PA12 [Gew.-%] | 60 | 99,9 | 0 | 0 | 0 |
| Säuregeregeltes PA12 [Gew.-%] | 40 | 0 | 98,9 | 98,4 | 97,4 |
| Brüggolen M1251 [Gew.-%] | 0 | 0 | 1 | 1,5 | 2,5 |
| Ceasit PC [Gew.-%] | 0 | 0,1 | 0,1 | 0,1 | 0,1 |
| Durchsatz [kg/h] | 10 | 10 | 10 | 10 | 10 |
| Schergeschwindigkeit [1/min] | 250 | 250 | 250 | 250 | 250 |
| Schmelzetemperatur [°C] | 251 | 249 | 251 | 251 | 251 |
| Schmelzedruck [bar] | 33 | 35 | 34 | 34 | 34 |
| Motorleistung [%] | 73 | 78 | 72 | 72 | 72 |
| ηᵣₑₗ gemäß DIN EN ISO 307 | 2,11 | 2,10 | 2,12 | 2,12 | 2,12 |

### Vergleichsbeispiel 1 sowie Beispiele 1 bis 3:

Mit einem Dehnrheometer wurden die in der Tabelle 2 angegebenen Zusammensetzungen auf ihre Schmelzesteifigkeit bei 240 °C bzw. 300 °C untersucht.

Dehnrheometer dienen zur Messung der Dehnfähigkeit von Schmelzen unter konstanter Abzugsgeschwindigkeit bzw. unter konstanter oder exponentieller Beschleunigung des Abzugstranges (M. H. Wagner, A. Bernat, V. Schulze, Kautschuk Gummi Kunststoffe 50. Jahrgang, Nr. 9/97; M. H. Wagner, V. Schulze, A. Göttfert, Polymer Engineering and Science, Mid-April 1996, Vol. 36, No. 7).

Beim hier verwendeten Gerät handelte es sich um einen Einschnecken-Laborextruder der Firma Göttfert mit max. 30 Upm und nachgeschalteter Abzugsvorrichtung. Im Extruder wurden die in der Tabelle 2 angegebenen Einsatzstoffe ausgehend vom Granulat bzw. einer Granulatmischung verarbeitet. Der austretende Strang wurde mit der Abzugsvorrichtung bei verschiedenen Geschwindigkeiten bis zum Abriss verstreckt, wobei das hierfür benötigte Drehmoment gemessen wurde; hieraus wurde die Abzugskraft berechnet. Die Ergebnisse sind in der Tabelle 2 dargestellt.

Man erkennt, dass erfindungsgemäß bei 300 °C etwa die gleiche oder sogar eine höhere Schmelzesteifigkeit erhalten wird wie bei einer konventionellen PA12-Formmasse bei der typischen Verarbeitungstemperatur von 240 °C. Die erfindungsgemäß hergestellte Polyamidformmasse kann daher im Temperaturbereich von 300 °C und darüber vorteilhaft zur Coextrusion mit hochschmelzenden Polymeren eingesetzt werden.

**Tabelle 2: Messungen mit dem Dehnrheometer**

| | | **Vergleichsbeispiel 1** | **Beispiel 1** | **Beispiel 2** | **Beispiel 3** |
|---|---|---|---|---|---|
| Compound A [Gew.-%] | | 100 | 0 | 0 | 0 |
| Batch 1 [Gew.-%] | | 0 | 60 | 60 | 60 |
| Batch 2 [Gew.-%] | | 0 | 40 | 0 | 0 |
| Batch 3 [Gew.-%] | | 0 | 0 | 40 | 0 |
| Batch 4 [Gew.-%] | | 0 | 0 | 0 | 40 |
| Durchsatz [g/min] | | 12 | 12 | 12 | 12 |
| Maximale Abzugskraft [cN] | 240 °C | 4,5 | 18,5 | 29,2 | 42,1 |
| | 300 °C | 2,4 | 4,1 | 5,4 | 7,4 |

## Patentansprüche

1. Verfahren zur Herstellung eines Mehrschichtverbundes, wobei
a) eine Polyamidformmasse bereitgestellt wird, wobei beim eingesetzten Polyamid mindestens 30 % der Endgruppen als Aminoendgruppen vorliegen,
b) eine Vormischung der Polyamidformmasse und 0,005 bis 10 Gew.-Teilen einer Verbindung mit mindestens zwei Estereinheiten der Kohlensäure mit Phenolen oder Alkoholen, bezogen auf 100 Gew.-Teile Polyamid hergestellt wird,
c) die Mischung gegebenenfalls gelagert und/oder transportiert wird und
d) die Mischung anschließend mit einer Formmasse coextrudiert wird, die mindestens 50 Gew.-% eines hochschmelzenden Polymers enthält, das einen Kristallitschmelzpunkt Tₘ von mindestens 270 °C und/oder eine Glasübergangstemperatur T_{g} von mindestens 180 °C aufweist, wobei die Mischung erst bei der Verarbeitung aufgeschmolzen wird und wobei Tₘ und T_{g} mittels DSC gemäß ISO 11357 gemessen werden.

2. Verfahren gemäß Anspruch 1,
**dadurch gekennzeichnet,**
**dass** das hochschmelzende Polymer eine Glasübergangstemperatur T_{g} von mindestens 190 °C aufweist.

3. Verfahren gemäß einem der Ansprüche 1 und 2,
**dadurch gekennzeichnet,**
**dass** die Verbindung mit mindestens zwei Estereinheiten der Kohlensäure mit Phenolen und Alkoholen als Masterbatch eingesetzt wird.

## Claims

1. A process for production of a multilayer composite,
a) a polyamide molding composition being provided, at least 30% of the end groups in the polyamide used taking the form of amino end groups,
b) a premix of the polyamide molding composition and from 0.005 to 10 parts by weight of a compound having at least two ester units of carbonic acid with phenols or alcohols, based on 100 parts by weight of polyamide, being prepared,
c) the mixture being stored and/or transported, if desired, and
d) the mixture then being coextruded with a molding composition comprising at least 50% by weight of a high-melting-point polymer whose crystallite melting point Tₘ is at least 270°C and/or whose glass transition temperature T_{g} is at least 180°C, melting of the mixture taking place only after the processing has begun, and Tₘ and T_{g} being measured by means of DSC in accordance with TSO 11357.

2. A process according to claim 1,
**characterized in that**
the glass transition temperature T_{g} of the high-melting-point polymer is at least 190°C.

3. A process according to any one of claims 1 and 2,
**characterized in that**
the compound having at least two ester units of carbonic acid with phenols or with alcohols is used in the form of masterbatch.

## Revendications

1. Procédé de fabrication d'un composite multicouche, selon lequel
a) un matériau de moulage polyamide est préparé, au moins 30 % des groupes terminaux du polyamide utilisé se présentant sous la forme de groupes terminaux amino,
b) un pré-mélange du matériau de moulage polyamide et 0,005 à 10 parties en poids d'un composé contenant au moins deux unités ester de l'acide carbonique avec des phénols ou des alcools, par rapport à 100 parties en poids de polyamide, est fabriqué,
c) le mélange est éventuellement entreposé et/ou transporté, puis
d) le mélange est co-extrudé avec un matériau de moulage qui contient au moins 50 % en poids d'un polymère de point de fusion élevé, qui présente un point de fusion des cristallites Tₘ d'au moins 270 °C et/ou une température de transition vitreuse T_{g} d'au moins 180 °C, le mélange n'étant fondu que lors de l'usinage, et Tₘ et T_{g} étant mesurés par DSC selon ISO 11357.

2. Procédé selon la revendication 1, **caractérisé en ce que** le polymère de point de fusion élevé présente une température de transition vitreuse T_{g} d'au moins 190 °C.

3. Procédé selon l'une quelconque des revendications 1 et 2, **caractérisé en ce que** le composé contenant au moins deux unités ester de l'acide carbonique avec des phénols et des alcools est utilisé sous la forme d'un mélange maître.
